(19) Europäisches Patentamt
European Patent Office
Office européen des brevets

(11) **EP 2 053 671 A2**

(12) **EUROPÄISCHE PATENTANMELDUNG**

(43) Veröffentlichungstag:
**29.04.2009 Patentblatt 2009/18**

(51) Int Cl.:
***H01L 41/09*** *(2006.01)*

(21) Anmeldenummer: 08104219.4

(22) Anmeldetag: **02.06.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **21.06.2007   DE 102007028642**

(71) Anmelder: **SIEMENS AKTIENGESELLSCHAFT 80333 München (DE)**

(72) Erfinder:
• **Gottlieb, Bernhard 81739, München (DE)**
• **Kappel, Andreas 85649, Brunnthal (DE)**
• **Schwebel, Tim 80337, München (DE)**
• **Wallenhauer, Carsten 01987, Schwarzheide (DE)**

(54) **Festkörperaktorischer Antrieb**

(57)     Ein Piezoaktorantrieb (11) weist mindestens einen durch Piezoaktoren (7,8) angetriebenen Antriebsring auf, wobei der Antriebsring (2) eine Aussparung (3) aufweist, in der eine mittels des Antriebsrings drehbare Welle (4) kraftschlüssig angeordnet ist, aufweisend eine Messvorrichtung zur Bestimmung eines Torsionswinkels des Antriebsrings mit mindestens einem berührungslosen Sensor (12).

FIG 3

**EP 2 053 671 A2**

**Beschreibung**

Die Erfindung betrifft einen festkörperaktorischer Antrieb, insbesondere einen Piezoaktorantrieb ("Piezoelectric Actuator Drive"; PAD), und ein Verfahren zum Bestimmen eines Torsionswinkels eines festkörperaktorischen Antriebs.

Beispielsweise offenbaren EP 1098429 B1, DE 10 2005 024 317 A1, DE 10 2005 028 482 A1 und DE 10 2005 036 822 A1 festkörperaktorische Antriebe mit einem durch Festkörperaktoren, insbesondere Piezoaktoren, angetriebenen Antriebsring, wobei der Antriebsring eine Aussparung aufweisen kann, in der eine mittels des Antriebsrings drehbare Welle angeordnet ist.

Zur Steuerung des Piezoaktorantriebs kommt einer Messung einer an der Motorwelle angreifenden Drehmomentlast besondere Bedeutung zu, da daraus vielerlei übergeordnete 'lastadaptive' Systemfunktionen für den Antrieb abgeleitet werden können, wie z. B.: der Antrieb stoppt bei Erreichen eines vorgegebenen Schwellwerts; der Antrieb reversiert beim Erreichen eines bestimmten Schwellwertes; oder der Antrieb beschleunigt oder verzögert im Drehmomentoptimum unabhängig vom an der Welle angekoppelten Massenträgheitsmoment. DE 10 2005 024 317 A1 beschreibt eine Bestimmung von an der Motorwelle angreifenden Kräften über eine Abtastung von an piezoelektrischen Stellantrieben anliegenden Spannungswerten. Dabei findet aufgrund des hohen, aber endlichen Innenwiderstands der Aktoren in diesen beim Halten eine langsame Entladung statt, so dass eine Messung mechanischer Größen nicht langzeitstabil ist.

Es ist eine Aufgabe der vorliegenden Erfindung, eine Möglichkeit zur betriebszustandsunabhängigen Messung einer an der Motorwelle angreifenden Drehmomentlast bereitzustellen, die zugleich langzeitstabil ist.

Diese Aufgabe wird durch einen festkörperaktorischen Antrieb, insbesondere Piezoaktorantrieb, nach Anspruch 1 und ein Verfahren nach Anspruch 8 gelöst.

Der festkörperaktorische Antrieb, insbesondere Piezoaktorantrieb, misst einen Torsionswinkel des Antriebsrings direkt (d. h. am Antriebsring oder einem damit fest verbundenen Element), und nicht indirekt über ein Spannungssignal eines Aktors. Der festkörperaktorische Antrieb weist einen durch Festkörperaktoren (z. B. Piezoaktor, elektrostriktiver Aktor, magnetostriktiver Aktor usw.) angetriebenen Antriebsring auf, wobei der Antriebsring eine Aussparung aufweist, in der eine mittels des Antriebsrings drehbare Welle kraftschlüssig angeordnet ist. Ferner weist der festkörperaktorische Antrieb eine Messvorrichtung zur Bestimmung eines Torsionswinkels des Antriebsrings - typischerweise bezüglich einer Drehachse der Welle - mit mindestens einem berührungslosen Sensor auf. Die Messrichtung des mindestens einen Sensors ist somit auf einen Messbereich auf dem Antriebsring gerichtet.

Dadurch kann die Messung des Torsionswinkels, und daraus des Drehmoments, unabhängig vom Betriebszustand des Piezoaktorantriebs (ruhend / in Betrieb, o.ä.) durchgeführt werden. Zudem ist die direkte Torsionswinkel- und Drehmomentmessung im Gegensatz zu den Lastmeßmethoden unter Nutzung der in den piezoelektrischen Aktoren lastabhängig generierten elektrischen Signale (Ladungen) langzeitstabil.

Vorzugsweise kann die Messvorrichtung ferner aus dem Torsionswinkel ein Drehmoment bzw. eine Drehmomentlast an der Welle bestimmen.

Vorzugweise umfasst der mindestens eine berührungslose Sensor mindestens zwei Weg- bzw. Abstandssensoren, insbesondere kapazitive Wegsensoren oder Wirbelstromsensoren. Die Weg- bzw. Abstandssensoren können einen Abstand zum Antriebsring und / oder eine Abstandsänderung zum Antriebsring erfassen.

Alternativ umfasst der mindestens eine berührungslose Sensor einen optischen Sensor, der eine Lichtquelle und einen von der Lichtquelle definiert beabstandeten Lichtdetektor umfasst, wobei der Lichtdetektor eine Positionsänderung eines von der Lichtquelle ausgesandten Lichtstrahls am Antriebsring abtastet.

Bevorzugt weist der Antriebsring Verlängerungselemente, insbesondere Verlängerungsarme, auf, an denen ein Sensorsignal abtastbar ist.

Die Verlängerungsarme können innerhalb eines Antriebsgehäuses angeordnet sein. Alternativ können die Verlängerungsarme aus einem Antriebsgehäuse herausgeführt sein, wobei die Messvorrichtung sowie ein Abtastgebiet für das Sensorsignal am jeweiligen Verlängerungsarm außerhalb des Antriebsgehäuses angeordnet sind.

Das Verfahren dient zum Bestimmen eines Torsionswinkels eines festkörperaktorischen Antriebs - insbesondere wie oben beschrieben - mit mindestens einem durch Festkörper-Stellantriebe (Festkörperaktoren) angetriebenen Antriebsring, wobei der Antriebsring eine Aussparung aufweist, in der eine mittels des Antriebsrings drehbare Welle kraftschlüssig angeordnet ist, wobei der Torsionswinkel des Antriebsrings mittels mindestens eines Sensors berührungslos bestimmt wird.

Vorzugsweise wird eine Drehmomentlast an der Welle aus der Bestimmung des Torsionswinkels abgeleitet.

Vorzugsweise wird der Torsionswinkel durch jeweiliges Abtasten einer Wegänderung des Antriebsrings oder damit fest verbundener Elemente bestimmt, insbesondere mittels kapazitiver Wegsensoren oder Wirbelstromsensoren.

Vorzugsweise wird der Torsionswinkel durch jeweiliges Abtasten einer Positionsänderung eines Lichtflecks am Antriebsring bestimmt.

Vorzugsweise werden Sensorsignale an Verlängerungsarmen des Antriebsrings abgetastet.

Der festkörperaktorische Antrieb ist aufgrund der guten Handhabbarkeit, der guten Betriebseigenschaften und des geringen Preises vorzugsweise ein Piezoaktor. Im Folgenden wird, wo nicht explizit anders ausgeführt, zur vereinfachten Beschreibung der Antrieb mit einem Piezoaktor als Festkörperaktor genauer ausgeführt. Jedoch ist diese Festlegung nicht dazu gedacht, den Umfang der Erfindung zu beschränken.

Im Folgenden wird ein Piezoaktorantrieb anhand von Ausführungsbeispielen schematisch genauer beschrieben. Dabei werden gleiche Komponenten mit gleichen Bezugsziffern bezeichnet.

FIG 1A      zeigt einen grundsätzlichen Aufbau eines Piezoaktorantriebs in Vorderansicht;

FIG 1B      zeigt den Piezoaktorantrieb aus FIG 1A in Seitenansicht;

FIG 2      den Piezoaktorantrieb aus FIG 1A in tordiertem Zustand in Seitenansicht;

FIG 3      zeigt den Piezoaktorantrieb aus FIG 2 mit einer Messvorrichtung zur Bestimmung eines Torsionswinkels gemäß einer ersten Ausführungsform;

FIG 4      zeigt den Piezoaktorantrieb aus FIG 2 mit einer Messvorrichtung zur Bestimmung eines Torsionswinkels gemäß einer zweiten Ausführungsform;

FIG 5      zeigt den Piezoaktorantrieb aus FIG 2 mit einer Messvorrichtung zur Bestimmung eines Torsionswinkels gemäß einer dritten Ausführungsform;

FIG 6      zeigt den Piezoaktorantrieb aus FIG 2 mit einer Messvorrichtung zur Bestimmung eines Torsionswinkels gemäß einer vierten Ausführungsform;

FIG 7      zeigt den Piezoaktorantrieb aus FIG 2 mit einer Messvorrichtung zur Bestimmung eines Torsionswinkels gemäß einer fünften Ausführungsform;

FIG 8      zeigt den Piezoaktorantrieb aus FIG 2 mit einer Messvorrichtung zur Bestimmung eines Torsionswinkels gemäß einer fünften Ausführungsform;

FIG 9A      zeigt den Piezoaktorantrieb aus FIG 2 mit einer Messvorrichtung zur Bestimmung eines Torsionswinkels gemäß einer fünften Ausführungsform in Vorderansicht;

FIG 9B      zeigt den Piezoaktorantrieb aus FIG 9A in Seitenansicht.

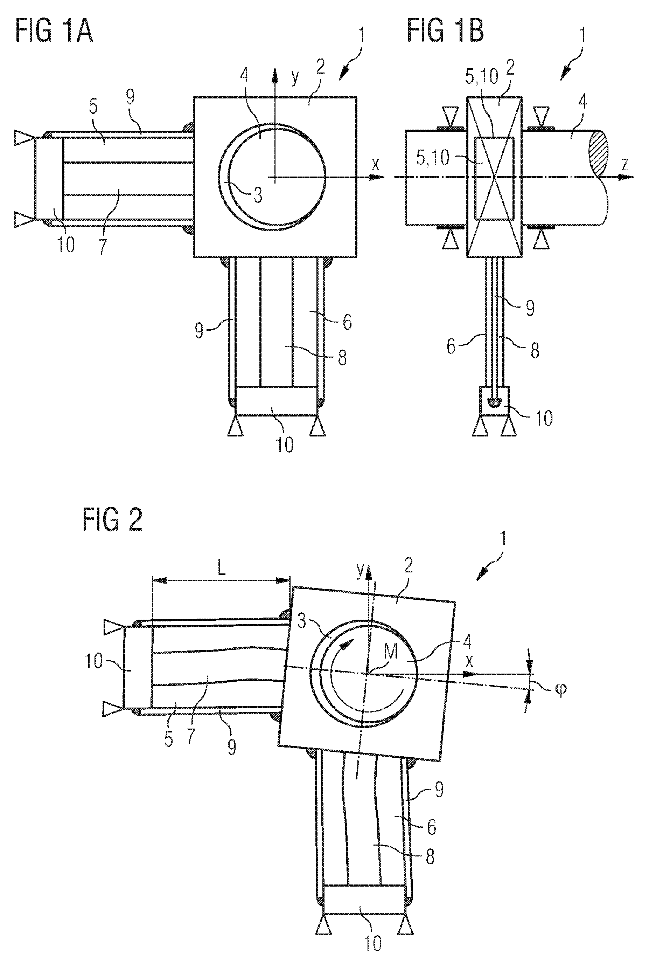

FIG 1 zeigt schematisch Bestandteile eines Piezoaktorantriebs 1 in Vorderansicht (FIG 1A) und Seitenansicht (FIG 1B). Ein Piezoaktorantrieb 1 weist einen Antriebsring 2 mit einer zylindrischen Bohrung 3 auf, die eine drehbar gelagerte Welle 4 umschließt. Der Antriebsring 2 kann mittels zweier Aktoreinheiten 5,6, deren Wirkrichtung orthogonal zueinander und orthogonal zur Wellenachse (z-Achse) liegt, in der Ebene senkrecht zur Wellenachse (x-y-Ebene) verschoben werden. Jede Aktoreinheit umfasst einen Festkörperaktor 7,8, der mittels Spannmittel 9 unter Druckvorspannung gesetzt und mechanisch steif an den Antriebsring 2 und an ein Halteelement 10 angekoppelt ist. Die Halteelemente 10 gewährleisten eine steife Anbindung (symbolisiert durch die Dreiecke) der Aktoreinheiten an z. B. ein nicht dargestelltes ortsfestes Antriebsgehäuse. Mittels geeigneter zeitabhängiger sinus- bzw. kosinusförmiger elektrischer Signale werden die Aktoreinheiten 5,6 zu Auslenkungen so angeregt, dass sie den Antriebsring 2 in eine kreisförmige Verschiebebewegung um die Welle versetzen, so dass die vom Antriebsring 2 umfasste Oberfläche der Welle 4 in der Innenfläche der Ringbohrung 3 kraftschlüssig abrollt, und dadurch die Welle 4 in Drehung um seine Längsachse (z-Achse) versetzt wird. Eine Verbesserung der Kraftübertragung zwischen den korrespondierenden Flächen von Antriebsring 2 und Welle 4 führt zu einem höheren maximalen Antriebsdrehmoment des Piezoaktorantriebs 1 und kann z. B. durch einen geeigneten Formschluss (z. B. eine Verzahnung) erreicht werden.

FIG 2 zeigt den Piezoaktorantrieb 1 in Vorderansicht aus FIG 1A, wobei an der Welle 4 nun ein Drehmoment M angreift. An der Welle 4 angreifende Drehmomentlasten werden von der Welle 4 über den Antriebsring 2 und die Aktoreinheiten 5,6 an ein nicht dargestelltes ortsfestes Gehäuse geleitet und von diesem aufgenommen. Die innermotorische Drehmomentübertragungsstrecke, bestehend aus Antriebsring 2 und Aktoreinheiten 5,6, besitzt eine hohe, aber keinesfalls unendlich hohe Torsionssteifigkeit, so dass im Falle einer an der Welle 4 angreifenden Drehmomentlast der Antriebsring 2 wie gezeigt geringfügig relativ zur Wellenachse (z-Achse) bzw. relativ zum (nicht dargestellten) Gehäuse tordiert wird. Der sich einstellende Torsionswinkel $\varphi$ des Antriebsrings 2 (oder steif mit ihm verbundener Elemente) im Bezug auf das Gehäuse ist in sehr guter Nährung direkt proportional zum an der Welle 4 angreifenden Drehmoment M. Der sich einstellende Torsionswinkel $\varphi$ bleibt in guter Näherung unbeeinflusst von der antreibenden kreisförmigen Verschiebebewegung des Antriebsrings 2. Der Antriebsring 2 bleibt (bis auf die kreisförmige Verschiebung zum Antreiben der Welle 4) raumfest, d. h., er dreht sich nicht mit der Welle 4 mit. Der Torsionswinkel φ des Antriebsrings 2, der sich unter Einwirkung der Drehmomentlast M auf die Welle 4 einstellt, stellt daher ein geeignetes Maß (=Sensorsignal) für eine Bestimmung der Größe der Drehmomentlast M dar.

Unter Anwendung der Eulerschen' Biegetheorie auf die hauptsächlich zur Ringtorsion beitragenden Festkörperaktoren 5,6 und unter Vernachlässigung der als biegeweich anzunehmenden Spannmittel 9 berechnet sich der unter der Drehmomentlast M einstellende Torsionswinkel φ zu:

$$\varphi \cong \tan\varphi = \frac{M}{2EI} \cdot \left\{ r \cdot \ln\left(\frac{r}{l+r}\right) + l \cdot \left(\frac{r^2 \cdot l \ln(1+l/r)}{l^2 + 2lr} + \frac{1}{2}\right) \right\},$$

mit folgender Nomenklatur:

l: Länge eines Festkörperaktors 7,8
r: Abstand zwischen Mittelpunkt des Antriebsrings 2 und Auflagefläche eines Festkörperaktors 7,8
M: Drehmoment (last)
E: E-Modul des Aktormaterials
I: Flächenträgheitsmoment des Aktorquerschnitts

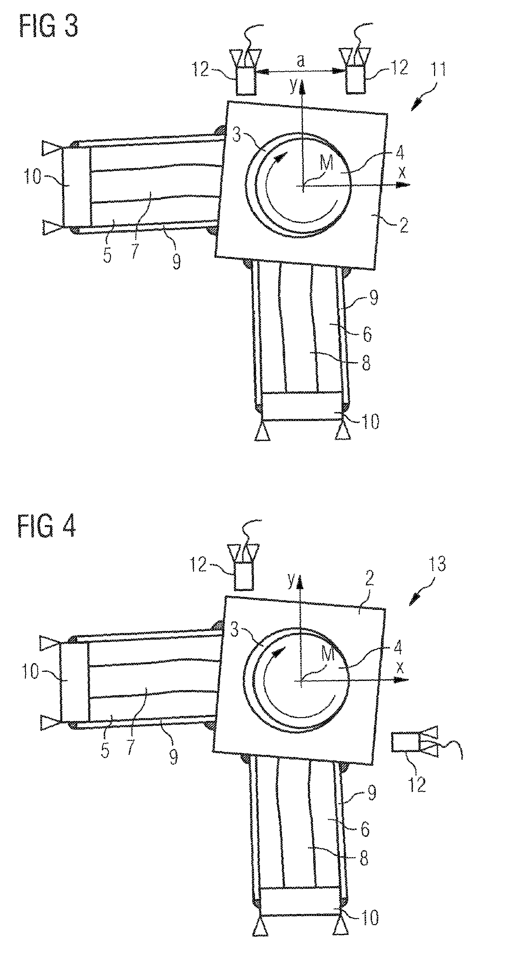

In FIG 3 weist der Piezoaktorantrieb 11 zusätzlich zu den Komponenten der FIGN 1A, 1B und 2 zwei ortsfeste (z. B. im nicht dargestellten Gehäuse befestigte) Weg- bzw. Abstandsmesssensoren 12 mit einer jeweiligen Ortsauflösung im μm-Bereich auf. Die Messrichtung der Abstandssensoren 12 ist parallel zueinander und liegt in der Bewegungsebene des Antriebsrings (x-y-Ebene), so dass jeweils Weg- bzw. Abstandsänderungen zwischen dem jeweiligen Sensor 12 und dem Antriebsring 2 in Messrichtung erfasst werden, so dass jeweils eine Komponente der x-y-Bewegung des Antriebsrings 2 (hier die y-Komponente) gemessen wird. Kommerziell sind derartige Sensoren 12 z. B. als kapazitive Wegsensoren oder als Wirbelstromsensoren erhältlich. Der Mittelwert der Wegsignale aus beiden Abstandsensoren 12 gibt die (zeitabhängige) Komponente der Verschiebung des Antriebsrings 2 wieder, die Differenz der Wegsignale geteilt durch deren Abstand a liefert ein Maß für den Torsionswinkel φ und somit für das momentan angreifende Drehmoment M. Derartige Messverfahren besitzen eine sehr hohe Dynamik (typischerweise mit einer Grenzfrequenz > 21 kHz bzw. T < 50 μs).

Es sind auch andere Sensoranordnungen anwendbar, von denen einige in den folgenden Abbildungen gezeigt sind.

FIG 4 zeigt einen Piezoaktorantrieb 13 mit einer weiteren Sensoranordnung, bei der die Messrichtungen der Sensoren 12 in der x-y-Ebene liegen und einen Winkel von hier beispielsweise von 90° einschließen. Der Vorteil dieser Anordnung liegt darin, dass die Bewegung des Antriebsrings 2 in der x-y-Ebene vollständig erfasst wird. Nachteilig wirkt sich der erhöhte Rechenaufwand zur Extraktion der Antriebsringtorsion φ aus den Mess-Signalen der Sensoren 12 aus.

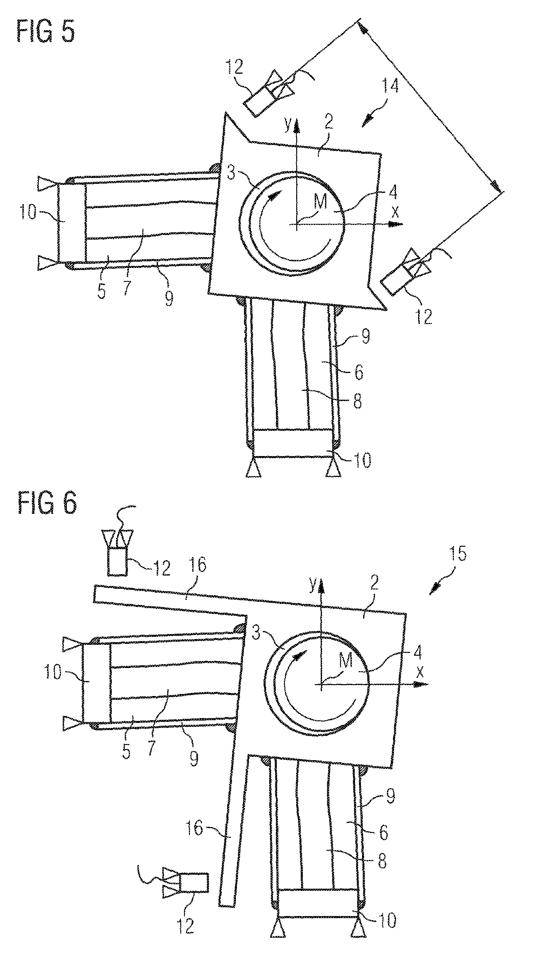

FIG 5 zeigt einen Piezoaktorantrieb 14 mit noch einer weiteren Sensoranordnung, wobei die nun parallel ausgerichteten Messrichtungen der Sensoren 12 in der x-y-Ebene liegen und auf Seitenflächen in Diagonalenrichtung des Antriebsrings 2 bzw. angewinkelt zur Stellrichtung der Aktoren 5,6 gerichtet sind. Der Vorteil dieser Anordnung liegt im vergrößerten seitlichen Abstand der Sensoren 12, wodurch die Empfindlichkeit der Messanordnung hinsichtlich einer Torsionserkennung gesteigert wird. Es gilt näherungsweise für die Wegänderung ΔWeg = a * Δφ, wobei mit φ der Torsionswinkel bezeichnet wird. Die Messempfindlichkeit hinsichtlich der Verschiebung des Antriebsrings 2 bleibt hingegen unverändert.

FIG 6 zeigt einen Piezoaktorantrieb 15 mit einer weiteren Sensoranordnung analog zu der in FIG 4 gezeigten. Zur Erhöhung der Messempfindlichkeit sind nun am Antriebsring 2 Verlängerungsarme 16 steif befestigt. Aus einer anderen Sicht heraus sind die Verlängerungsarme 16 ein Teil des Antriebsrings 2.

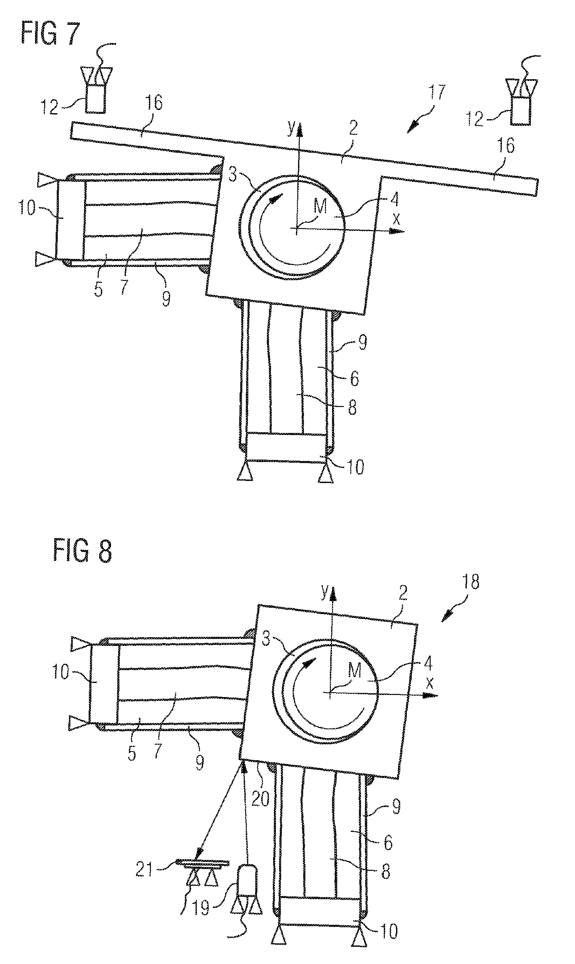

FIG 7 zeigt einen Piezoaktorantrieb 17 mit einer weiteren Sensoranordnung analog zu der in FIG 3 gezeigten, wobei hier zur Erhöhung der Messempfindlichkeit am Antriebsring 2 nun Verlängerungsarme 16 vorgesehen sind.

FIG 8 zeigt einen Piezoaktorantrieb 18 mit noch einer weiteren Sensoranordnung mit optischer Vermessung des Torsionswinkels. Mindestens eine (z. B. im nicht dargestellten Gehäuse angebrachte) ortsfeste Lichtquelle 19 richtet einen Lichtstrahl L auf eine spiegelnde Seitenfläche des Antriebsrings 2 bzw. einen mit dem Antriebsring 2 verbundenen Spiegel 20, wodurch der Strahl L zurückreflektiert wird. Ein ortsfester ortsauflösender Detektor 21 detektiert die Position des reflektierten Strahls L' bzw. die Position des Lichtflecks am Antriebsring 2, woraus der Torsionswinkel φ und damit das angreifende Drehmoment M präzise ermittelt werden können. Aufgrund der Geringfügigkeit der (Antriebs-)Verschiebebewegung bezogen auf die Lichtzeigerlänge übt diese keinen bzw. nur einen vernachlässigbar kleinen störenden Einfluss auf die Torsionsmessung aus. Statt eines Spiegels 20 können auch Reflektorfolien zum Einsatz kommen, wodurch die optischen Anforderungen an die Lichtquelle 19 gering gehalten werden können. Einfache Strichgitter und Methoden der Mustererkennung können ebenso zum Einsatz kommen. Einfachste Systeme dieser Art sind in Großserie, z. B. in Computer-Mäusen, im Einsatzkostengünstig, hochgenau und robust.

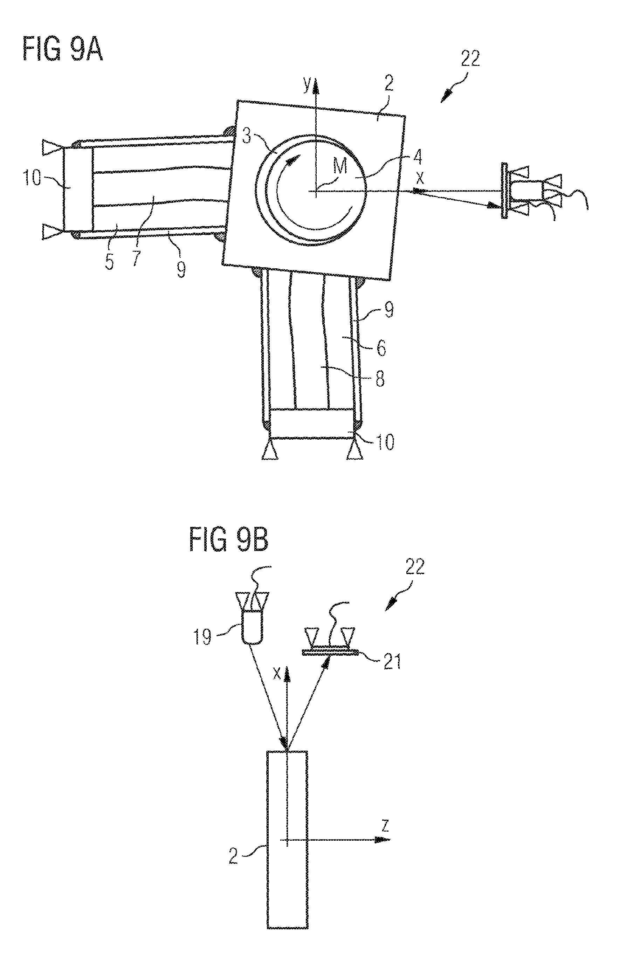

FIG 9 zeigt einen Piezoaktorantrieb 22 mit einer besonders günstigen Anordnung von Lichtquelle 19 und Detektor 21 in der x-z-Ebene, angeordnet an unterschiedlichen z-Koordinatenwerten, mit FIG 9A in Vorderansicht und FIG 9B in Seitenansicht. Der Vorteil dieser Anordnung liegt darin, dass in sehr guter Näherung die ebene Antriebsringbewegung in der x-y-Ebene nur zu einer Ablenkung des reflektierten Lichtstrahls in z-Richtung führt, wohingegen eine Antriebsringtorsion φ zu einer unabhängigen Ablenkung des Lichtstrahls in y-Richtung führt. Mit Hilfe eines in y-Richtung ortsauflösenden Detektors 21 kann somit die Antriebsringtorsion präzise bestimmt werden. Durch Verlängerung des Lichtweges kann auch hier die Empfindlichkeit der Messanordnung gesteigert werden. Dazu können beispielsweise spiegelnde Flächen an Verlängerungsarmen des Antriebsrings 2 vorhanden sein oder Bohrungen im Antriebsring 2 vorgesehen sein, die spiegelnd abgeschlossen werden.

Bei den obigen Messprinzipien ist die Torsion des Antriebsrings unabhängig vom Betriebszustand des Piezoaktorantriebs messbar. Sie ist sowohl bei ruhendem Piezoaktorantrieb als auch bei im Betrieb befindlichen Piezoaktorantrieb messbar. Ferner ist das Messprinzip langzeitstabil im Gegensatz zu den unter Punkt 2 zitierten Lastmeßmethoden unter Nutzung der in den piezoelektrischen Aktoren lastabhängig generierten elektrischen Signale (Ladungen) langzeitstabil.

Selbstverständlich ist die vorliegende Erfindung nicht auf die gezeigten Ausführungsformen beschränkt. So kann die Messvorrichtung auch mehr als zwei Sensoren aufweisen. Auch können die Sensoren unter beliebigen geeigneten Winkeln zueinander angeordnet sein.


**Patentansprüche**

1. Festkörperaktorischer Antrieb, insbesondere Piezoaktorantrieb (11;13;14;15;17;18;22), mit mindestens einem durch Piezoaktoren (7,8) angetriebenen Antriebsring (2), wobei der Antriebsring (2) eine Aussparung (3) aufweist, in der eine mittels des Antriebsrings (2) drehbare Welle (4) kraftschlüssig angeordnet ist, aufweisend eine Messvorrichtung zur Bestimmung eines Torsionswinkels (φ) des Antriebsrings (2) mit mindestens einem berührungslosen Sensor (12; 19,21).

2. Festkörperaktorischer Antrieb (11;13;14;15;17;18;22) nach Anspruch 1, bei dem die Messvorrichtung ferner zur Bestimmung einer Drehmomentlast (M) an der Welle (4) aus der Bestimmung des Torsionswinkels (φ) eingerichtet ist.

3. Festkörperaktorischer Antrieb (11;13;14;15;17) nach Anspruch 1 oder 2, bei dem der mindestens eine berührungslose Sensor mindestens zwei Wegsensoren (12) umfasst, insbesondere kapazitive Wegsensoren oder Wirbelstromsensoren.

4. Festkörperaktorischer Antrieb (18;22) nach Anspruch 1 oder 2, bei dem der mindestens eine berührungslose Sensor einen optische Sensor (19,21) umfasst, der eine Lichtquelle (19) und einen von der Lichtquelle (19) definiert beabstandeten Lichtdetektor (21) umfasst, wobei der Lichtdetektor (21) eine Positionsänderung eines von der Lichtquelle (19) ausgesandten Lichtstrahls am Antriebsring (2) abtastet.

5. Festkörperaktorischer Antrieb (14;17) nach einem der vorhergehenden Ansprüche, bei dem der Antriebsring (2) Verlängerungselemente, insbesondere Verlängerungsarme (16), aufweist, an denen ein Sensorsignal abtastbar ist.

6. Festkörperaktorischer Antrieb (14;17) nach Anspruch 5, bei dem die Verlängerungselemente (16) innerhalb eines Antriebsgehäuses angeordnet sind.

7. Festkörperaktorischer Antrieb (14;17) nach Anspruch 5, bei dem die Verlängerungselemente (16) aus einem Antriebsgehäuse herausgeführt sind und die Messvorrichtung sowie ein Abtastgebiet für das Sensorsignal am jeweiligen Verlängerungsarm (16) außerhalb des Antriebsgehäuses angeordnet sind.

8. Verfahren zum Bestimmen eines Torsionswinkels (φ) eines festkörperaktorischen Antriebs, insbesondere Piezoaktorantriebs (11;13;14;17;18;22), mit mindestens einem durch Piezoaktoren (7,8) angetriebenen Antriebsring (2), wobei der Antriebsring (2) eine Aussparung (3) aufweist, in der eine mittels des Antriebsrings (2) drehbare Welle (4) kraftschlüssig angeordnet ist, wobei der Torsionswinkel (φ) des Antriebsrings (2) mittels mindestens eines Sensors (12; 19,21) berührungslos bestimmt wird.

9. Verfahren nach Anspruch 8, bei dem ferner eine Drehmomentlast (M) an der Welle (4) aus der Bestimmung des Torsionswinkels (φ) bestimmt wird.

10. Verfahren nach Anspruch 8 oder 9, bei dem der Torsionswinkel durch jeweiliges Abtasten einer Wegänderung des Antriebsrings (2) oder damit fest verbundener Elemente bestimmt wird, insbesondere mittels kapazitiver Wegsensoren oder Wirbelstromsensoren.

11. Verfahren nach Anspruch 8 oder 9, bei dem der Torsionswinkel (φ) durch jeweiliges Abtasten einer Positionsänderung eines Lichtflecks am Antriebsring (2) bestimmt wird.

12. Verfahren nach einem der Ansprüche 8 bis 11, bei dem Sensorsignale an Verlängerungsarmen (16) des Antriebsrings (2) abgetastet werden.

FIG 1A

FIG 1B

FIG 2

FIG 3

FIG 4

FIG 5

FIG 6

FIG 7

FIG 8

FIG 9A

FIG 9B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1098429 B1
- DE 102005024317 A1
- DE 102005028482 A1
- DE 102005036822 A1